# EUROPEAN PATENT SPECIFICATION

(11) **EP 0 943 209 B1**
(45) Date of publication and mention of the grant of the patent: **04.04.2007**
(21) Application number: 98937699.1
(22) Date of filing: 19.08.1998
(51) Int. Cl.: H04N 7/26, H04N 5/14

(54) **MOTION ESTIMATION AND MOTION-COMPENSATED INTERPOLATION**
BEWEGUNGSSCHÄTZUNG UND BEWEGUNGSKOMPENSIERTE INTERPOLATION
ESTIMATION DE MOUVEMENT ET INTERPOLATION COMPENSEE PAR LE MOUVEMENT

(30) Priority: 23.09.1997 EP 97202912; 20.11.1997 EP 97203623
(43) Date of publication of application: 22.09.1999
(73) Proprietor: Koninklijke Philips Electronics N.V., 5621 BA Eindhoven (NL)
(72) Inventor: DE HAAN, Gerard, NL-5656 AA Eindhoven (NL); SCHUTTEN, Robert, Jan, NL-5656 AA Eindhoven (NL)
(74) Representative: Steenbeek, Leonardus Johannes
(86) International application number: PCT/IB1998/001275
(87) International publication number: WO 1999/016248

(56) References cited:
- EP-A- 0 294 957
- IEEE INTERNATIONAL CONFERENCE ON ACOUSTICS, SPEECH AND SIGNAL PROCESSING, May 1996, Vol. 4, PETER CSILLAG et al., "Motion-Compensated Frame Rate Conversion Using an Accelerated Motion Model", ISBN 0-7803-3192-3, pages 2319-2322.
- IEEE INTERNATIONAL CONFERENCE ON IMAGE PROCESSING, October 1997, Vol. 1, KUNIO KAWAGUCHI et al., "Frame Rate Up-Conversion Considering Multiple Motion", pages 727-730.

## Description

The invention relates to a method and a device for motion estimation, and to a video display apparatus comprising a motion-compensated interpolation device.

For instance EP 0 294 957 discloses a television standards converter comprising a motion analysis for analysing the motion between consecutive fields of an input television signal of one television standard, and for deriving motion vectors independent of the motion, a filter for recursively filtering the motion vectors, and an interpolator for aligning the fields independent of the field motion vectors.

Motion estimation is applied in coding and scan rate conversion of video data. Although usually the picture rate of this video data at the input of the motion estimator is fixed, the picture rate of the video source from which this data originated may differ from that of the processed data. Particularly, this occurs when film material is converted to video, or when video material from one video standard is converted to another standard somewhere in the video chain prior to the motion estimator.

A common way to deal with the required picture rate conversions is to use the most recent picture until a new one becomes available. When converting from a low picture rate to a higher one, this implies repetition of source pictures in the new format, while a conversion from a high to a lower rate leads to occasionally skipping images of the source material.

In either case, the resulting video exhibits an irregular motion pattern (judder), which violates the common assumption in motion estimators that motion has a strong temporal consistency. In motion estimators that try to profit from this assumption, by using temporal prediction vectors, the problem results that the irregular motion behavior eliminates the usefulness of this temporal prediction vectors. A serious degradation of the estimated motion vectors may result.

In [8] a solution for this problem was disclosed, for movie material transmitted in a 50 Hz television standard. The idea here is to recirculate the vector prediction memory when a repeated picture occurs. In [7] a method was disclosed in which the picture memory storing the 'previous' picture was recirculated until a non-repeated picture occurred. A characteristic that both prior art methods share, is that the pattern has to be known in order to change the memory control.

From IEEE International Conference on Acoustics, Speech and Signal Processing, May 1996, Vol. 4, PETER CSILLAG et al. "Motion-Compensated Frame Rate Conversion Using an Accelerated Motion Model", ISBN 0-7803-3192-3, pages 2319-2322 a multi resolution PEL-recursive motion estimation is known, which consists of three basic components, which are construction of multi resolution image representation, motion estimation, and propagation strategies for refinement of the motion fields estimated in coarsa resolutions.

It is an object of the invention to provide a very robust motion estimation method that needs no a priori knowledge of the repetition pattern to reliably estimate motion. To this end, a first aspect of the invention provides a method and a device as defined in the independent claims Preferred embodiments are defined in the dependent claims.

In a motion estimating method in accordance to a primary aspect of the invention, at least two motion data sets estimated on the basis of different previous image pairs of input video data, are furnished to a motion data generator.

In a preferred embodiment, the motion estimator takes temporal prediction vectors from more than one previous image pair (as much as the maximum length of the repetition pattern), and selects the best of these as a basis for the estimation process, or uses all of them as candidates in a matching process.

This solution is economically justifiable, particularly in object based motion estimators [12], where the number of motion vectors to be stored is very small. A software version of the algorithm has been shown to run real-time on a fully programmable device, more particularly the Philips TM1000 (TriMedia) processor.

These and other aspects of the invention as defined in the independent claims will be apparent from and elucidated with reference to the embodiments described hereinafter.

In the drawings:
Fig. 1 illustrates a preferred motion estimator in accordance with the present invention; and
Fig. 2 shows a display apparatus in accordance with the present invention.

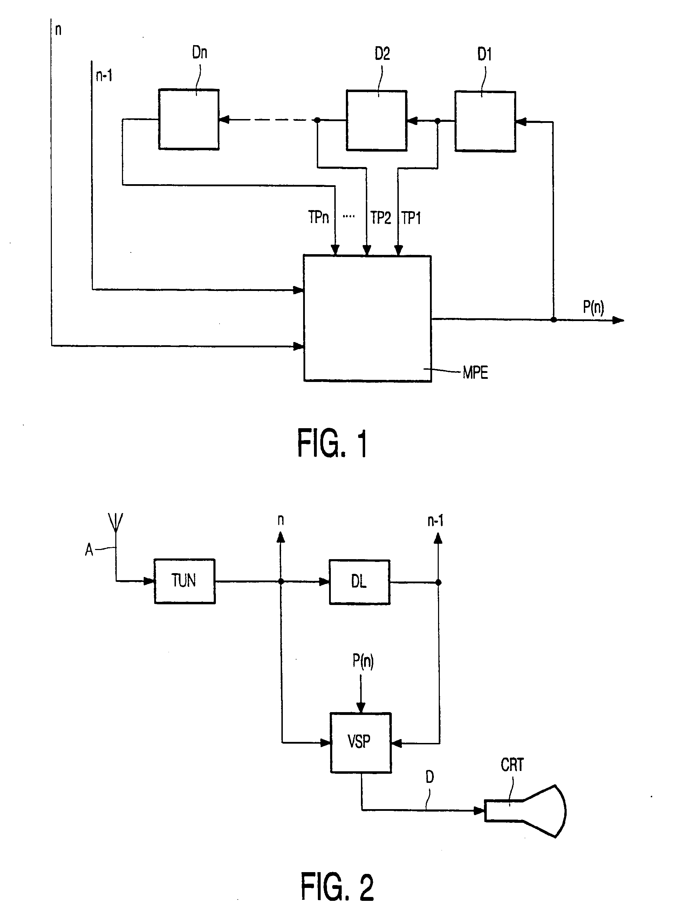

Fig. 1 illustrates a preferred motion estimator in accordance with the present invention. Current image data from the present field n and previous image data from the previous field n-1 are applied to a motion parameter estimator unit MPE to obtain motion parameters P(n). Picture delays D1, D2, .. Dn furnish delayed versions TP1, TP2, .. TPn of the motion parameters P(n) to the motion parameter estimator unit MPE.

While in this embodiment, a parameter estimator is shown, the invention is not limited to parameter-based motion estimators. The invention can also be used with a normal recursive motion estimator, if the prediction memory is adapted to contain all parameters P(n). Picture delays D1, D2, .. Dn furnish delayed versions TP1, TP2, .. TPn of the motion parameters P(n) to the motion parameter estimator unit MPE.

While in this embodiment, a parameter estimator is shown, the invention is not limited to parameter-based motion estimators. The invention can also be used with a normal recursive motion estimator, if the prediction memory is adapted to contain all necessary previous motion information in the form of motion vectors. The unit MPE would then supply motion vectors P(n) rather than motion parameter P(n). In this manner, any irregular motion patters as caused by 60 to 50 Hz field rate conversion, conversions in telecine machines operating at 24 Hz, and as present in pop-music video clips can be taken care of.

Fig. 2 shows a display apparatus in accordance with the present invention. The display apparatus receives antenna signals from an antenna A. The antenna signals are converted into baseband video signals by a tuner TUN. A field delay DL generates the fields n and n-1 used in the motion estimator of Fig. 1. A video signal processor VSP receives the fields n and n-1 as well as the motion data P(n) from the motion estimator of Fig. 1 for generating a display signal D which is supplied to a display device CRT.

A primary aspect of the present invention can be summarized as follows. A method to estimate motion parameters from video data is disclosed. The invention enables temporal predictive motion estimation on video data that due to simple picture rate conversion techniques (repetition of the most recent picture) exhibits an irregular motion. The solution exists in the use of multiple temporal prediction vectors taken from various previous image pairs. This solution is economically justifiable, particularly in object based motion estimators, where the number of motion vectors to be stored is very small. A software version of the algorithm has been shown to run real-time on the Philips TM1000 (TriMedia) processor.

The following salient features of a preferred embodiment are noteworthy. A method, and apparatus realizing this method, for estimating motion parameter vectors from video data, which furnishes, for at least some image-parts, at least two (temporal) prediction vectors estimated from data of different previous image pairs. Preferably, the above-mentioned at least two prediction vectors are candidates in a vector selection process determining the output vector for an image (part). Advantageously, the best, according to a criterion function, of the above-mentioned at least two prediction vectors is used as a basis for calculating candidate vectors (e.g. updating process) that are input of a vector selection process determining the output vector for an image (part). Preferably, the decision information (which of the at least two prediction vectors is best, according to a criterion function) over a number of successive images (image parts), is used to detect picture repetition patterns (e.g. 3-2 pull-down and 2-2 pull-down of movie material, but also other patterns due to source-destination picture frequency mismatches).

Although originally designed to run as an application on the Philips TriMedia processor, more applications are possible. Particularly, the concept can be designed into next generation VGA-controllers. Since this is dedicated silicon, the total cost is negligible. Such a VGA-controller may have an improved performance, compared to the TriMedia solution as in dedicated silicon much more processing power is available. Furthermore, it is expected that if more than two parallel parameter estimators are applied, the performance can be brought to a level potentially better than that of the current high-end solutions at a possibly lower cost.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The invention can be implemented by means of hardware comprising several distinct elements, and by means of a suitably programmed computer. In the device claim enumerating several means, several of these means can be embodied by one and the same item of hardware.

Related inventions have been described in the references mentioned below.

### REFERENCES:

[1] US-A-5,534,946 (Attorneys' docket PHN 14,066)
[2] G. de Haan, P.W.A.C. Biezen, H. Huijgen and O.A. Ojo, "True Motion Estimation with 3-D Recursive Search Block-Matching", IEEE Transactions on Circuits and Systems for Video Technology, Vol.3, October 1993, pp. 368-388.
[3] G. de Haan, P.W.A.C Biezen, H. Huijgen, and O.A. Ojo, "Graceful Degradation in Motion Compensated Field-Rate Conversion", in: Signal Processing of HDTV, V, L. Stenger, L. Chiariglione and M. Akgun (Eds.), Elsevier 1994, pp. 249-256.
[4] WO1997/046022PCT/IB97/00548 (Attorneys' docket PHN 16,112)
[5] G. de Haan, J. Kettenis, and B. Deloore, 'IC for Motion Compensated 100 Hz TV, with a Smooth Motion Movie-Mode', International Conference on Consumer Electronics, ICCE 95, June 1995, Chicago.
[6] G. de Haan, P.W.A.C Biezen, "Sub-pixel motion estimation with 3-D recursive search block-matching", Signal Processing: Image Communication 6 (1994), pp. 229-239.
[7] WO1998/011721PCT/IB97/00884 (Attorneys' docket PHN 15,943)
[8] US-A-5,495,300 (Attorneys' docket PHN 14,079)
[9] G. de Haan and H. Huijgen, "New algorithm for motion estimation," in Chiariglione [38], pp. 109-116.
[10] G. de Haan and H. Huijgen, "Motion estimation for TV picture enhancement," in Signal Processing of HDTV III (H. Yasuda and L. Chiariglione, eds.), pp. 241-248, Elseviers Science Publishers B.V., 1992.
[11] G. de Haan, J. Kettenis, and B. Deloore, "IC for motion compensated 100 Hz TV, with a smooth motion movie-mode," IEEE Transactions on Consumer Electronics, voL 42, pp. 165-174, May 1996.
[12] WO1999/016251EP Application no. 97202912.8, filed on 23.09.1997, and corresponding applications (Attorneys' docket PHN 16,529).

## Claims

1. A method of estimating motion data from video data, the method comprising the steps:
- applying image data from a present field (n) and previous image data from a previous field (n-1) on a motion estimator unit (MPE),
- calculating a motion data set (P(n)) in the motion estimator unit (MPE),
**characterized** on that,
- delayed versions (TP1-TPn) of the motion data set (P(n)) are furnished to the motion estimator unit (MPE),
- the delayed versions **(TP1-TPn)** are candidates in a motion data selection process, and
- the motion data set (P(n)) is calculated further based on the delayed versions (TP1-TPn) such that the output motion data set (P(n)) is a temporal predictive motion estimation taking picture rate conversion into account, wherein a best of the delayed versions (TP1-TPn) according to a criterion is used as basis for calculating candidate motion data sets that are input of a motion data set selection process determining the motion data set (P(n)).

2. The method of claim 1, wherein the motion data sets (TP1-TPn) represent a motion parameter.

3. The method of claim 1, wherein the motion data sets (TP1-TPn) represent a motion vector.

4. The method of claim 1, wherein the picture repetition rate is at least one of
A) 3-2 pull down,
B) 2-2 pull down.

5. A device for estimating motion data from video data, the device comprising:
- a motion data generator (MPE) for receiving image data from a present field (n), and previous image data from a previous field (n-1), and for calculating a motion data set (P(n)),
**characterized in that**,
- delay units (D1-Dn) receive the calculated motion data set (P(n)) and provide delayed versions (TP1-TPn) of the received motion data set (P(n)) to the motion estimator unit (MPE),
- the delayed versions (TP1-TPn) are candidates in a motion data selection process, and
- the motion estimator unit (MPE) calculates the motion data set (P(n)) further based on the delayed versions (TP1-TPn) such that the output motion data set (P(n)) is a temporal predictive motion estimation taking picture rate conversion into account, wherein a best of the delayed versions (TP1-TPn) according to a criterion is used as basis for calculating candidate motion data sets that are input of a motion data set selection process determining the motion data set (P(n)).

## Patentansprüche

1. Verfahren zum Schätzen von Bewegungsdaten aus Videodaten, wobei das Verfahren die nachfolgenden Verfahrensschritte umfasst:
- das Zuführen von Bilddaten aus einem aktuellen Teilbild (n) und von vorhergehenden Bilddaten aus einem vorhergehenden Teilbild (n-1) zu einer Bewegungsschätzereinheit (MPE),
- das Berechnen eines Bewegungsdatensatzes (P(n)) in der Bewegungsschätzereinheit (MPE),
**dadurch gekennzeichnet, dass**
- verzögerte Versionen (TP1-TPn) des Bewegungsdatensatzes (P(n)) werden der Bewegungsschätzereinheit (MPE) zugeführt,
- die verzögerte Versionen (TP1-TPn) sind Kandidat in einem Bewegungsdatenselektionsprozess, und
- der Bewegungsdatensatz (P(n)) wird weiterhin auf Basis der verzögerten Versionen (TP1-TPn) berechnet, so dass der Ausgangsbewegungsdatensatz (P(n)) eine einstweilige prädiktive Bewegungsschätzung ist, wobei Bildratenumwandlung berücksichtigt wird, wobei eine beste der verzögerten Versionen (TP1-TPn) nach einem Kriterium als Basis zum Berechnen von Kandidatbewegungsdatensätzen verwendet wird, die einem Bewegungsdatensatzselektionsprozess ausgesetzt werden, der den Bewegungsdatensatz (P(n)) bestimmt.

2. Verfahren nach Anspruch 1, wobei die Bewegungsdatensätze (TP1-TPn) einen Bewegungsparameter darstellen.

3. Verfahren nach Anspruch 1, wobei die Bewegungsdatensätze (TP1-TPn) einen Bewegungsvektor darstellen.

4. Verfahren nach Anspruch 1, wobei die Bildwiederholungsrate wenigstens eine der nachfolgenden ist:
A) 3-2 "pull down"
B) 2-2 "pull down".

5. Anordnung zum Schätzen von Bewegungsdaten aus Videodaten, wobei die Anordnung Folgendes umfasst:
- einen Bewegungsdatengenerator (MPE) zum Empfangen von Bilddaten aus einem aktuellen Teilbild (n), und von vorhergehenden Bilddaten aus einem vorhergehenden Teilbild (n-1), und zum Berechnen eines Bewegungsdatensatzes (P(n)),
**dadurch gekennzeichnet, dass**
- Verzögerungseinheiten (D1-Dn) den berechneten Bewegungsdatensatz (P(n)) empfangen und verzögerte Versionen (TP1-TPn) des empfangenen Bewegungsdatensatzes (P(n)) zu der Bewegungsschätzereinheit (MPE) liefern,
- die verzögerten Versionen (TP1-TPn) Kandidat in einem Bewegungsdatenselektionsprozess sind und
- die Bewegungsschätzereinheit (MPF) den Bewegungsdatensatz (P(n)) weiterhin auf Basis der verzögerten Versionen (TP1-TPn) derart berechnet, dass der Ausgangsbewegungsdatensatz (P(n)) eine einstweilige prädiktive Schätzung ist, wobei die Bildratenumwandlung berücksichtigt wird, wobei eine beste der verzögerten Versionen (TP1-TPn) entsprechend einem Kriterium als Basis zum Berechnen von Kandidatbewegungsdatensätzen verwendet wird, die Eingabe eines Bewegungsdatensatzselektionsprozesses sind, wobei der Bewegungsdatensatz (P(n)) bestimmt wird.

## Revendications

1. Procédé pour estimer les données de mouvement à partir de données vidéo, le procédé comprenant les étapes suivantes :
- application à une unité d'estimation de mouvement (MPE), des données d'image d'un champ actuel (n) et des données d'image d'un champ précédent (n-1),
- calcul d'un ensemble de données de mouvement (P(n)) dans l'unité d'estimation de mouvement (MPE),
**caractérisé en ce que**,
- des versions retardées (TP1-TPn) de l'ensemble de données de mouvement (P(n)) sont fournies à l'unité d'estimation de mouvement (MPE),
- les versions retardées (TP1-TPn) sont candidates dans un processus de sélection de données de mouvement, et
- l'ensemble de données de mouvement (P(n)) est calculé en plus sur base des versions retardées (TP1-TPn) de sorte que l'ensemble de données de mouvement de sortie (P(n)) est une estimation prédictive temporelle de mouvement tenant compte de la conversion de vitesse d'image, dans laquelle une meilleure des versions retardées (TP1-TPn) selon un critère, est utilisée comme base pour calculer les ensembles candidats de données de mouvement qui sont introduits dans un processus de sélection d'ensembles de données de mouvement déterminant l'ensemble de données de mouvement (P(n)).

2. Procédé selon la revendication 1, dans lequel les ensembles de données de mouvement (TP1-TPn) représentent un paramètre de mouvement.

3. Procédé selon la revendication 1, dans lequel les ensembles de données de mouvement (TP1-TPn) représentent un vecteur de mouvement.

4. Procédé selon la revendication 1, dans lequel la vitesse de répétition d'image est au moins un de
A) ajustement 24 images 3-2,
B) ajustement 24 images 2-2.

5. Dispositif pour l'estimation de données de mouvement à partir de données vidéo, le dispositif comprenant :
- un générateur de données de mouvement (MPE) pour recevoir des données d'image d'un champ actuel (n), et des données précédentes d'image d'un champ précédent (n-1), et pour le calcul d'un ensemble de données de mouvement (P(n)), **caractérisé en ce que**,
- des unités de retard (D1-Dn) reçoivent l'ensemble de données de mouvement calculé (P(n)) et fournissent des versions retardées (TP1-TPn) de l'ensemble de données de mouvement (P(n)) reçu, à l'unité d'estimation de mouvement (MPE),
- les versions retardées (TP1-TPn) sont candidates à un processus de sélection de données de mouvement, et
- l'unité d'estimation de mouvement (MPE) calcule l'ensemble de données de mouvement (P(n)) en plus sur base des versions retardées (TP1-TPn) de sorte que l'ensemble de données de mouvement (P(n)) en sortie est une estimation prédictive temporelle de mouvement tenant compte de la conversion des vitesses d'image, dans laquelle une meilleure des versions retardées (TP1-TPn) selon un critère, est utilisée comme base pour calculer les ensembles candidats de données de mouvement qui sont introduits dans un processus de sélection d'ensembles de données de mouvement déterminant l'ensemble de données de mouvement (P(n)).
